# EUROPEAN PATENT APPLICATION

(11) **EP 4 274 295 A1**
(43) Date of publication of application: **08.11.2023**
(21) Application number: 22766294.7
(22) Date of filing: 08.03.2022
(51) Int. Cl.: H04W 24/02

(54) **SIDELINK DISCONTINUOUS RECEPTION CONFIGURATION METHOD AND APPARATUS, DEVICE, AND READABLE STORAGE MEDIUM**

(30) Priority: 12.03.2021 CN 202110272523
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Murgitroyd & Company
(86) International application number: PCT/CN2022/079715
(87) International publication number: WO 2022/188771

(57) **Abstract**

This application discloses a sidelink discontinuous reception configuration method and apparatus, a device, and a readable storage medium. The method includes: obtaining an SL DRX parameter from a network side.

## Description

### CROSS-REFERENCE TO RELATED APPLICATION

This application claims priority to Chinese Patent Application No. 202110272523.1, filed on March 12, 2021 in China, which is incorporated herein by reference in its entirety.

### TECHNICAL FIELD

This application belongs to the technical field of communication, and specifically relates to a sidelink discontinuous reception configuration method and apparatus, a device, and a readable storage medium.

### BACKGROUND

The discontinuous reception (Discontinuous Reception, DRX) mechanism is introduced in sidelink (SideLink, SL) to save power for some terminals (such as user equipment (User Equipment, UE)), for SL groupcast services and broadcast services, because there is no negotiation process between transmitting (Transmit, TX) UE and receiving (Receive, RX) UE, how to configure an SL DRX parameter of a terminal in a sidelink is an urgent problem to be solved.

### SUMMARY

The purpose of the embodiments of this application is to provide a sidelink discontinuous reception configuration method and apparatus, a device, and a readable storage medium, so as to solve the problem of how to configure an SL DRX parameter of a terminal in a sidelink.

According to a first aspect, a sidelink discontinuous reception configuration method is provided, executed by a terminal, including:
obtaining an SL DRX parameter from a network side.

According to a second aspect, a sidelink discontinuous reception configuration method is provided, executed by a network side device, including:
sending an SL DRX parameter to a terminal in a sidelink.

According to a third aspect, a sidelink discontinuous reception configuration apparatus is provided, applied to a terminal, including:
an obtaining module, configured to obtain an SL DRX parameter from a network side.

According to a fourth aspect, a sidelink discontinuous reception configuration apparatus is provided, applied to a network side device, including:
a sending module, configured to send an SL DRX parameter to a terminal in a sidelink.

According to a fifth aspect, a terminal is provided, where the terminal includes a processor, a memory, and a program stored in the memory and executable on the processor, where when the program is executed by the processor, steps of the method according to the first aspect are implemented.

According to a sixth aspect, there is provided a network side device. The network side device includes: a processor, a memory, and a program stored in the memory and executable on the processor, and when the program is executed by the processor, the step of the method according to the second aspect is performed.

According to a seventh aspect, a readable storage medium is provided, where the readable storage medium stores a program or an instruction, and when the program or the instruction is executed by a processor, steps of the method according to the first aspect or the second aspect are implemented.

According to an eighth aspect, a computer program product is provided, where the computer program product is stored in a non-volatile storage medium, and the computer program product is executed by at least one processor to implement steps of the method according to the first aspect or the second aspect.

According to a ninth aspect, a chip is provided, where the chip includes a processor and a communications interface, the communications interface is coupled to the processor, and the processor is configured to execute a program or an instruction to implement the method according to the first aspect or the second aspect.

According to a tenth aspect, the embodiment of this application provides a communication device, configured to execute the steps of the method described in the first aspect or the second aspect.

In the embodiments of this application, terminals in different transmission modes can all obtain SL DRX parameters from the network side. The SL DRX parameters can take into account different service characteristics well, which is conducive to ensuring the efficiency of network resources and greatly improving the power saving performance of the terminal while ensuring system efficiency.

### BRIEF DESCRIPTION OF DRAWINGS

FIG. 1 is a block diagram of a wireless communication system to which embodiments of this application may be applied;
FIG. 2 is a flowchart 1 of a sidelink discontinuous reception configuration method provided by the embodiment of this application;
FIG. 3 is a flowchart 2 of a sidelink discontinuous reception configuration method provided by the embodiment of this application;
FIG. 4 is a schematic diagram 1 of a sidelink discontinuous reception configuration apparatus provided in an embodiment of this application;
FIG. 5 is a schematic diagram 2 of a sidelink discontinuous reception configuration apparatus provided in an embodiment of this application;
FIG. 6 is a schematic diagram of a terminal provided by an embodiment of this application; and
FIG. 7 is a schematic diagram of a network side device provided by an embodiment of this application.

### DESCRIPTION OF EMBODIMENTS

The following clearly describes the technical solutions in embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the specification and claims of this application are used to distinguish between similar objects instead of describing a designated order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, "and" in the specification and claims represents at least one of connected objects. Symbol "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, in the following descriptions, a new radio (New Radio, NR) system is described for an illustration purpose, and NR terms are used in most of the following descriptions, although these technologies may also be applied to other applications than an NR system application, such as a 6-th generation (6-th Generation, 6G) communications system.

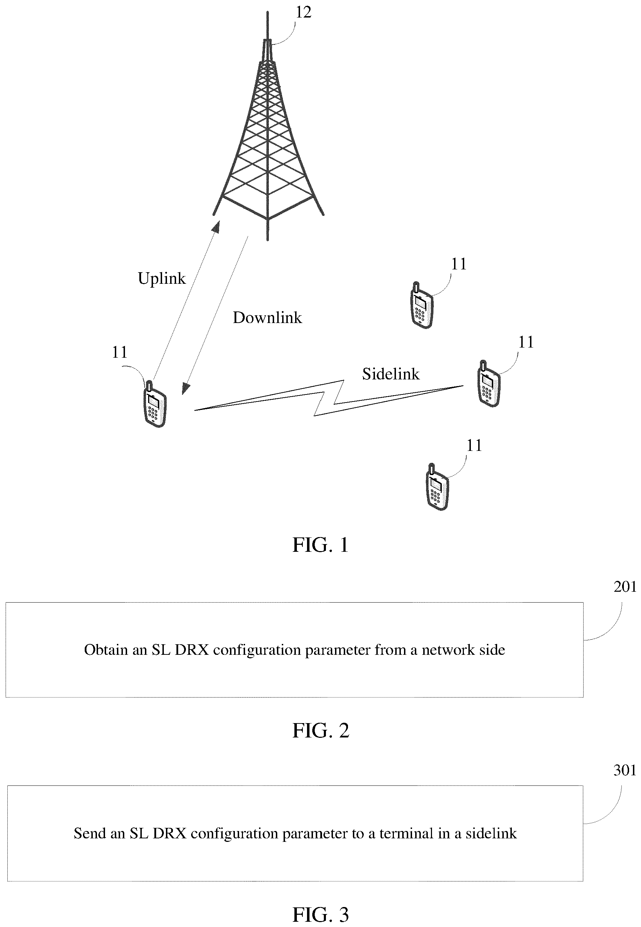

Referring to FIG. 1, FIG. 2 is a block diagram of a wireless communications system to which embodiments of this application can be applied. The wireless communication system includes a terminal 11 and a network side device 12. The terminal 11 can establish a communication connection through a sidelink interface, and the terminal 11 can establish a communication connection with the network side device 12 through a cellular network communication interface (Uu interface). The terminal 11 may also be called a terminal device or user equipment (User Equipment, UE), and the terminal 11 may be a mobile phone, a tablet personal computer (Tablet Personal Computer), a laptop computer (Laptop Computer) or a notebook computer, a personal digital Assistant (Personal Digital Assistant, PDA), a palmtop computer, a netbook, an ultra-mobile personal computer (Ultra-Mobile Personal Computer, UMPC), a mobile Internet device (Mobile Internet Device, MID), a wearable device (Wearable Device) or a vehicle-mounted device (Vehicle User Equipment, VUE), a pedestrian terminal (Pedestrian User Equipment, PUE), and other terminal side devices. The wearable device includes: bracelets, earphones, glasses, etc. It should be noted that a specific type of the terminal 11 is not limited in this embodiment of this application.

The network side device 12 may be a base station or a core network. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a wireless local area network (Wireless Local Area Networks, WLAN) access point, a wireless fidelity (Wireless Fidelity, WiFi) node, a transmitting receiving point (Transmitting Receiving Point, TRP), radio access network nodes or other appropriate terms in the art. As long as a same technical effect is achieved, the base station is not limited to a specified technical term. It should be noted that, in embodiments of this application, only a base station in the NR system is used as an example, but a specific type of the base station is not limited.

In order to facilitate the understanding of the embodiments of this application, the following technical points are introduced first:

### 1. Introduction to sidelink.

The Long Term Evolution (LTE) system supports sidelinks (sidelink) from release 12. The sidelink is used for direct data communication between UEs without going through network devices.

The design of LTE sidelink is suitable for specific public safety affairs (such as emergency communication in disaster places such as fire places or earthquakes), or vehicle to everything (Vehicle To Everything, V2X) communication, etc. Internet of vehicles communication includes various services, such as basic security type communication, advanced (automatic) driving, formation, and sensor extension. Because the LTE sidelink supports only broadcast communication, the LTE sidelink is mainly used for basic safety communication. Other advanced V2X services with a strict quality of service (Quality of Service, QoS) requirement in terms of delay and reliability are supported by a new radio (New Radio, NR) Sidelink.

The 5-th generation (5-th Generation, 5G) NR system may be used in an operating band above 6 GHz that LTE does not support, and supports a higher operating bandwidth. However, the NR system of the current release only supports only an interface between a base station and a terminal, and does not support a sidelink interface for direct communication between terminals.

The sidelink interface may also be called a PC5 interface.

### 2. Transmission form of sidelink:

The current sidelink transmission includes broadcast (broadcast), groupcast (groupcast), and unicast (unicast). Unicast is one-to-one transmission. Groupcast is a one-to-many transmission. Broadcast is also one to many one to many transmission, but there is no concept that the SL belongs to a same group.

Currently, the unicast and groupcast communication in sidelink transmission supports the hybrid automatic repeat request (Hybrid Automatic Repeat reQuest, HARQ) feedback mechanism at the physical layer.

### 3. DRX.

The purpose of discontinuous reception is to save power, and the terminal in the DRX state does not need to continuously monitor a control channel. However, if the terminal does not monitor the control channel for a long time, once data arrives, the delay of data transmission will be increased. In order to take into account power saving and transmission delay, 5G medium access control (Medium Access Control, MAC) supports two DRX cycles, that is, long DRX cycle and short DRX cycle, according to the length of time in which the terminal monitors the channel. If it is predicted that the data volume of the terminal is relatively frequent or the service is sensitive to delay, the network can configure the terminal to use a short DRX cycle; if it is predicted that the data volume of the terminal is sparse and is not sensitive to the delay, the network can configure the terminal to use only a long DRX cycle. In order to make it easier for the terminal to switch between the long DRX cycle and the short DRX cycle, it is required that the long DRX cycle is an integer multiple of the short DRX cycle, so as to ensure that ondurations (onDuration) of the two are aligned.

In order to support the DRX mechanism, the base station configures DRX-related timers and parameters for the terminal, specifically including:
(1) drx-LongCycleStartOffset: Used to configure the cycle and offset of the long DRX cycle. The unit of cycle and offset can be milliseconds.
(2) drx-ShortCycle: Used to configure the cycle and offset of the short DRX cycle. The unit of cycle and offset can be milliseconds.
(3) drx-ShortCycleTimer: Used to control the duration of the short DRX cycle used by the terminal, and the unit is an integer, indicating that once the terminal enters the short DRX cycle, it must maintain an integer multiple of the short DRX cycle.
(4) drx-onDurationTimer: When the DRX onDuration timer runs, the terminal needs to continuously monitor the physical downlink control channel (Physical Downlink Control Channel, PDCCH) of the network. The unit of the timer can be milliseconds.
(5) drx-SlotOffset: The delay for the terminal to start drx-onDurationTimer. This parameter is used to set the offset of the starting moment of DRX onDuration relative to a starting point of a subframe. The offset can be an integer multiple of 1/32 milliseconds.
(6) drx-InactivityTimer: DRX inactivity timer. The timer starts in a first symbol after the terminal receives PDCCH signaling for new uplink/downlink data scheduling. During the running of the timer, the terminal needs to continuously monitor a control channel. The unit of the timer can be milliseconds.
(7) drx-HARQ-RTT-TimerDL: Downlink HARQ round-trip time (Round-Trip Time, RTT) timer. Based on the maintenance of each downlink process, the timer length is the minimum time interval from the time of HARQ feedback to the receipt of the HARQ retransmission for the process. Only when the data corresponding to the downlink process is not successfully decoded, the terminal starts the timer in a first symbol after the HARQ NACK feedback of the process. If only drx-HARQ-RTT-TimerDL and/or drx-HARQ-RTT-TimerUL runs in the current terminal, the terminal does not need to monitor the PDCCH control channel, and the unit of the timer can be a symbol.
(8) drx-HARQ-RTT-TimerUL: The uplink HARQ RTT timer is maintained based on each uplink process. The length of the timer is the minimum time interval from the transmission time of the physical uplink shared channel (PUSCH) to the receipt of the HARQ retransmission for the process. After the uplink PUSCH transmission, the terminal starts the uplink HARQ RTT timer for the uplink process. If the PUSCH transmission uses PUSCH repetition (PUSCH repetition), the uplink HARQ RTT timer starts after the first PUSCH repetition, to ensure that after the base station resolves in advance the PUSCH, the retransmission of the PUSCH can be terminated in time. The unit of this timer can be a symbol.
(9) drx-RetransmissionTimerDL: Downlink retransmission timer. This timer is started in a next symbol after drx-HARQ-RTT-TimerDL expires. During the running of the timer, the terminal monitors the control channel of the network, and stops the timer if it receives downlink scheduling information or downlink configured grant (configured grant) for the process. The unit of the timer can be a time slot (time slot).
(10) drx-RetransmissionTimerUL: Uplink retransmission timer. This timer is started in a next symbol after drx-HARQ-RTT-TimerUL expires. During the running of the timer, the terminal monitors the control channel of the network, and stops the timer if it receives uplink scheduling information or uplink configured grant for the process. The unit of the timer is a time slot (time slot).

The existing DRX mechanism is used for the Uu interface, configured by the network side through UE-specific RRC signaling, and used for discontinuous reception between the network side and the UE. However, since the SL interface is between two or more UEs, for different manners of SL groupcast (groupcast), broadcast (broadcast), and unicast (unicast), there is currently no solution to how to perform related SL DRX configuration.

With reference to the accompanying drawings, the following describes in detail a sidelink discontinuous reception configuration method and apparatus, a device, and a readable storage medium in the embodiments of this application based on specific embodiments and application scenarios.

Referring to FIG. 2, an embodiment of this application provides an SL DRX configuration method. The execution subject of the method may be a terminal, and the specific step includes: Step 201.

Step 201: Obtain an SL DRX parameter from a network side.

The SL DRX parameter (or SL DRX configuration parameter) is used to configure the DRX of the terminal. The SL DRX parameter can include DRX-related timers and parameters of the sidelink. The terminal can perform corresponding discontinuous reception operation according to the SL DRX parameter, and the terminal can take into account power saving and transmission delay.

That is, for the groupcast service and the broadcast service, the network side can uniformly configure SL DRX parameters for the sender and receiver of the sidelink.

In an implementation of this application, the step of obtaining an SL DRX parameter from the network side includes any one of the following methods:
Method 1: in a case that the sender of the sidelink or the receiver of the sidelink is out of coverage (Out of Coverage, OOC), SL DRX parameters corresponding to groupcast services, broadcast services and/or unicast services are obtained according to a pre-configuration message (pre-configuration) sent by the network side.

Exemplarily, in a case that the TX UE or RX UE is in the off-network state and out of coverage, the TX UE or RX UE obtains SL DRX parameter from the pre-configuration message.

Method 2: in a case that the sender of the sidelink or the receiver of the sidelink is in an idle state or an inactive state or a connected state, SL DRX parameters corresponding to groupcast services and/or broadcast services are obtained according to a system information block (System Information Block, SIB) message sent by the network side.

Method 3: in a case that the sender of the sidelink or the receiver of the sidelink is in an idle state or an inactive state, the SL DRX parameter corresponding to the unicast service is obtained according to the system information block message sent by the network side.

Exemplarily, in a case that the TX UE or the RX UE is in an idle or inactive state, the TX UE or the RX UE obtains specific SL DRX parameters from the SIB message.

Method 4: in a case that the sender of the sidelink or the receiver of the sidelink is in a connected state, SL DRX parameters corresponding to unicast services are obtained through dedicated radio resource control (Radio Resource Control, RRC) signaling.

Specifically, The sender of the sidelink or the receiver of the sidelink in the connected state reports service information of the sender or the receiver to the network side.

Exemplarily, in a case that the TX UE or RX UE is in the connected state, the TX UE or RX UE sends all its SL service information, for example, QoS flow information, to the serving base station, and the serving base station transmits specific SL DRX parameters to the TX UE or RX UE through a dedicated RRC message.

In an implementation manner of this application, the method further includes:
in a case that the sender of the sidelink obtains the SL DRX parameter from the network side, sending the SL DRX parameter to the receiver of the sidelink.

For example, for a unicast service, the sender of the sidelink obtains the SL DRX parameter through a pre-configuration message or a system information block message, and the sender of the sidelink can send the SL DRX parameter to the receiver of the sidelink through a PC5 interface.

In an implementation manner of this application, the method further includes:
in a case that the receiver of the sidelink obtains the SL DRX parameter from the network side, sending the SL DRX parameter to the sender of the sidelink.

For example, for a unicast service, the receiver of the sidelink obtains the SL DRX parameter through a pre-configuration message or a system information block message, and the receiver of the sidelink can send the SL DRX parameter to the sender of the sidelink through a PC5 interface.

In an implementation manner of this application, the pre-configuration message or the system information block message includes: an SL DRX parameter set corresponding to a QoS flow or a QoS flow combination;
where the SL DRX parameter set is used to determine the SL DRX parameter with the QoS flow combination of the unicast service, the groupcast service, or the broadcast service of the terminal.

In an implementation manner of this application, the SL DRX parameter meets a service requirement of each QoS flow in the unicast service, the groupcast service or the broadcast service of the terminal.

In an implementation manner of this application, the SL DRX parameter includes: a DRX cycle, where the DRX cycle is a DRX cycle specified in the SL DRX parameter set corresponding to all QoS flows of the unicast service, the groupcast service or the broadcast service of the terminal, and the specified DRX cycle is selected from the SL DRX parameter set according to a preset manner.

For example, the specified DRX cycle is the smallest DRX cycle selected from the SL DRX parameter set according to the sorting result. It can be understood that the selection method of the specified DRX cycle is not limited in this embodiment of the application, for example, it can also be selected randomly.

Exemplarily, all QoS flows include: QoS flow1, QoS flow2 and QoS flow3, QoS flow1 corresponds to SL DRX parameter set 1, QoS flow2 corresponds to SL DRX parameter set 2, QoS flow3 corresponds to SL DRX parameter set 3, SL DRX parameter set 1 includes DRX cycle 1, SL DRX parameter set 2 includes DRX cycle2, and SL DRX parameter set 3 includes DRX cycle3. Assuming that DRX cycle 1 is greater than DRX cycle2, DRX cycle2 is greater than DRX cycle3, that is, DRX cycle3 is the smallest, the final DRX cycle is DRX cycle3.

In an embodiment of this application, the SL DRX parameter includes: the length of the onDuration timer, where the length of the onDuration timer is a length (such as the maximum length of the onDuration timer or the length of one of the onDuration timers) of the onDuration timer specified in the DRX parameter set corresponding to all QoS flows of the unicast service, groupcast service, or broadcast service of the terminal, or a length of the onDuration timer in the SL DRX parameter set corresponding to the specified DRX cycle.

Exemplarily, all QoS flows include: QoS flow1, QoS flow2 and QoS flow3, QoS flow1 corresponds to SL DRX parameter set 1, QoS flow2 corresponds to SL DRX parameter set 2, QoS flow3 corresponds to SL DRX parameter set 3, SL DRX parameter set 1 includes length 1 of the onDuration timer, SL DRX parameter set 2 includes length 2 of the onDuration timer, and SL DRX parameter set 3 includes length 3 of the onDuration timer. Length 1 of the onDuration timer is greater than length 2 of the onDuration timer, length 2 of the onDuration timer is greater than length 3 of the onDuration timer, that is, length 1 of the onDuration timer is the largest, and the final SL DRX parameter includes length 1 of the onDuration timer.

Also exemplarily, all QoS flows include: QoS flow1, QoS flow2 and QoS flow3, QoS flow1 corresponds to SL DRX parameter set 1, QoS flow2 corresponds to SL DRX parameter set 2, QoS flow3 corresponds to SL DRX parameter set 3, SL DRX parameter set 1 includes DRX cycle 1, SL DRX parameter set 2 includes DRX cycle2, and SL DRX parameter set 3 includes DRX cycle3. Assuming that DRX cycle 1 is greater than DRX cycle2, DRX cycle2 is greater than DRX cycle3, that is, DRX cycle3 is the smallest, and the final DRX cycle includes the length 3 of the onDuration timer in the SL DRX parameter set 3.

In an embodiment of this application, the SL DRX parameter includes: a length of an inactivity timer, where the length of the inactivity timer is a length of the inactivity timer (such as the maximum length of the inactivity timer or the length of one of the inactivity timers) specified in the SL DRX parameter set corresponding to all QoS flows of the unicast service, groupcast service, or broadcast service of the terminal, or a length of the inactivity timer in the SL DRX parameter set corresponding to the specified DRX cycle.

Exemplarily, all QoS flows include: QoS flow1, QoS flow2 and QoS flow3, QoS flow1 corresponds to SL DRX parameter set 1, QoS flow2 corresponds to SL DRX parameter set 2, QoS flow3 corresponds to SL DRX parameter set 3, SL DRX parameter set 1 includes length 1 of the inactivity timer, SL DRX parameter set 2 includes length 2 of the inactivity timer, and SL DRX parameter set 3 includes length 3 of the inactivity timer. Assuming that length 1 of the inactivity timer is greater than length 2 of the inactivity timer, length 2 of the inactivity timer is greater than length 3 of the inactivity timer, that is, length 1 of the inactivity timer is the largest, the final SL DRX parameter includes length 1 of the inactivity timer.

Also exemplarily, all QoS flows include: QoS flow1, QoS flow2 and QoS flow3, QoS flow1 corresponds to SL DRX parameter set 1, QoS flow2 corresponds to SL DRX parameter set 2, QoS flow3 corresponds to SL DRX parameter set 3, SL DRX parameter set 1 includes DRX cycle 1, SL DRX parameter set 2 includes DRX cycle2, and SL DRX parameter set 3 includes DRX cycle3. Assuming that DRX cycle 1 is greater than DRX cycle2, DRX cycle2 is greater than DRX cycle3, that is, DRX cycle3 is the smallest, the final DRX cycle includes the length 3 of the inactivity timer in SL DRX parameter set 3.

In an embodiment of this application, the SL DRX parameter includes: a length of a HARQ RTT timer, where the length of the HARQ RTT timer is a length of the HARQ RTT timer (for example, the minimum length of the HARQ RTT timer or a length of one of the HARQ RTT timers) specified in the SL DRX parameter set corresponding to all QoS flows of the unicast service, groupcast service, or broadcast service of the terminal, or a length of the HARQ RTT timer in the SL DRX parameter set corresponding to the specified DRX cycle.

Exemplarily, all QoS flows include: QoS flow1, QoS flow2 and QoS flow3, QoS flow1 corresponds to SL DRX parameter set 1, QoS flow2 corresponds to SL DRX parameter set 2, QoS flow3 corresponds to SL DRX parameter set 3, SL DRX parameter set 1 includes length 1 of the HARQ RTT timer, SL DRX parameter set 2 includes length 2 of the HARQ RTT timer, and SL DRX parameter set 3 includes length 3 of the HARQ RTT timer. Assuming that length 1 of the HARQ RTT timer is greater than length 2 of the HARQ RTT timer, length 2 of the HARQ RTT timer is greater than length 3 of the HARQ RTT timer, that is, length 1 of the HARQ RTT timer is the largest, the final SL DRX parameter includes length 1 of the HARQ RTT timer.

Also exemplarily, all QoS flows include: QoS flow1, QoS flow2 and QoS flow3, QoS flow1 corresponds to SL DRX parameter set 1, QoS flow2 corresponds to SL DRX parameter set 2, QoS flow3 corresponds to SL DRX parameter set 3, SL DRX parameter set 1 includes DRX cycle 1, SL DRX parameter set 2 includes DRX cycle2, and SL DRX parameter set 3 includes DRX cycle3. Assuming that DRX cycle 1 is greater than DRX cycle2, DRX cycle2 is greater than DRX cycle3, that is, DRX cycle3 is the smallest, the final DRX cycle includes length 3 of the HARQ RTT timer in SL DRX parameter set 3.

In an embodiment of this application, the SL DRX parameter includes: a length of a retransmission timer, where the length of the retransmission timer is a length of the retransmission timer (for example, the maximum length of the retransmission timer or the length of one of the retransmission timers) specified in the SL DRX parameter set corresponding to all QoS flows of the unicast service, groupcast service, or broadcast service of the terminal, or a length of the retransmission timer in the SL DRX parameter set corresponding to the specified DRX cycle.

Exemplarily, all QoS flows include: QoS flow1, QoS flow2 and QoS flow3, QoS flow1 corresponds to SL DRX parameter set 1, QoS flow2 corresponds to SL DRX parameter set 2, QoS flow3 corresponds to SL DRX parameter set 3, SL DRX parameter set 1 includes length 1 of the retransmission timer, SL DRX parameter set 2 includes length 2 of the retransmission timer, and SL DRX parameter set 3 includes length 3 of the retransmission timer. Length 1 of the retransmission timer is greater than length 2 of the retransmission timer, length 2 of the retransmission timer is greater than length 3 of the retransmission timer, that is, length 1 of the retransmission timer is the largest, and the final SL DRX parameter includes length 1 of the retransmission timer.

Also exemplarily, all QoS flows include: QoS flow1, QoS flow2 and QoS flow3, QoS flow1 corresponds to SL DRX parameter set 1, QoS flow2 corresponds to SL DRX parameter set 2, QoS flow3 corresponds to SL DRX parameter set 3, SL DRX parameter set 1 includes DRX cycle 1, SL DRX parameter set 2 includes DRX cycle2, and SL DRX parameter set 3 includes DRX cycle3. Assuming that DRX cycle 1 is greater than DRX cycle2, DRX cycle2 is greater than DRX cycle3, that is, DRX cycle3 is the smallest, the final DRX cycle includes length 3 of the retransmission timer in SL DRX parameter set 3.

In an embodiment of this application, the SL DRX parameter includes: a parameter in an SL DRX parameter set in a DRX cycle (for example, the smallest DRX cycle or one of the DRX cycles) specified in the SL DRX parameter set corresponding to all QoS flows of the unicast service, the groupcast service or the broadcast service of the terminal.

Exemplarily, all QoS flows include: QoS flow1, QoS flow2 and QoS flow3, QoS flow1 corresponds to SL DRX parameter set 1, QoS flow2 corresponds to SL DRX parameter set 2, QoS flow3 corresponds to SL DRX parameter set 3, SL DRX parameter set 1 includes DRX cycle 1, SL DRX parameter set 2 includes DRX cycle2, and SL DRX parameter set 3 includes DRX cycle3. Assuming that DRX cycle 1 is greater than DRX cycle2, DRX cycle2 is greater than DRX cycle3, that is, cycle3 is the smallest, the final SL DRX parameter includes SL DRX parameter set 3.

The above method of determining the final SL DRX parameter is: if one of the SL DRX parameters is compared, the value of the parameter in the final SL DRX set can be determined according to the comparison result of this parameter, or the entire SL DRX set can be determined, that is, according to comparison of a value of a parameter, the SL DRX set where this parameter is located is selected as the final SL DRX set.

In an implementation manner of this application, the method further includes:
randomly selecting an offset value of the SL DRX parameter according to the length of the DRX cycle and/or resource pool configuration.

It should be noted that the random selection of an offset can use the existing random selection mechanism to prevent all UEs from selecting overlapping DRX patterns, resulting in increased collision probability and uneven resource utilization.

In the embodiments of this application, terminals in different transmission modes can all obtain SL DRX parameters from the network side. The SL DRX parameters can take into account different service characteristics well, which is conducive to ensuring the efficiency of network resources and greatly improving the power saving performance of the terminal while ensuring system efficiency.

Referring to FIG. 3, an embodiment of this application provides an SL DRX configuration method. The execution subject of the method may be a network side device, and the specific step includes: Step 301.

Step 301: Send an SL DRX parameter to a terminal in a sidelink.

The SL DRX parameter is used to configure DRX of the terminal, so that the terminal can take into account power saving and transmission delay.

In an embodiment of this application, the step of sending an SL DRX parameter to the terminal includes:
sending the SL DRX parameter to a sender of the sidelink or a receiver of the sidelink through a system information block message or a pre-configuration message or dedicated RRC signaling;
where a service type corresponding to the SL DRX parameter includes one or more of the following: unicast service, groupcast service, and broadcast service.

In an implementation manner of this application, the pre-configuration message or the system information block message includes: an SL DRX parameter set corresponding to a QoS flow or a QoS flow combination;
where the SL DRX parameter set is used to determine the SL DRX parameter with the QoS flow combination of the unicast service, the groupcast service, or the broadcast service of the sender of the sidelink or the receiver of the sidelink.

In an implementation manner of this application, the SL DRX parameter meets a service requirement of each QoS flow in the unicast service, the groupcast service or the broadcast service of the terminal.

In an implementation manner of this application, the SL DRX parameter includes: a DRX cycle, where the DRX cycle is a DRX cycle specified in the SL DRX parameter set corresponding to all QoS flows, and the specified DRX cycle is selected from the SL DRX parameter set according to a preset manner.

In an embodiment of this application, the SL DRX parameter includes: a length of an onDuration timer, where the length of the onDuration timer is the maximum length of the onDuration timer in the SL DRX parameter set corresponding to all QoS flows, or a length of the onDuration timer in the SL DRX parameter set corresponding to the specified DRX cycle.

In an embodiment of this application, the SL DRX parameter includes: a length of an inactivity timer, where the length of the inactivity timer is the maximum length of the inactivity timer in the SL DRX parameter set corresponding to all QoS flows, or a length of the inactivity timer in the SL DRX parameter set corresponding to the specified DRX cycle.

In an embodiment of this application, the SL DRX parameter includes: a length of a HARQ RTT timer, where the length of the HARQ RTT timer is the minimum length of the HARQ RTT timer in the SL DRX parameter set corresponding to all QoS flows, or a length of the HARQ RTT timer in the SL DRX parameter set corresponding to the specified DRX cycle.

In an embodiment of this application, the SL DRX parameter includes: a length of a retransmission timer, where the length of the retransmission timer is the maximum length of the retransmission timer in the SL DRX parameter set corresponding to all QoS flows, or a length of the retransmission timer in the SL DRX parameter set corresponding to the specified DRX cycle.

In an embodiment of this application, the SL DRX parameter includes: parameters in the first SL DRX parameter set, where the first SL DRX parameter set is an SL DRX parameter set of a specified DRX cycle in the SL DRX parameter set corresponding to all QoS flows.

In the embodiments of this application, terminals in different transmission modes can all obtain SL DRX parameters from the network side. The SL DRX parameters can take into account different service characteristics well, which is conducive to ensuring the efficiency of network resources and greatly improving the power saving performance of the terminal while ensuring system efficiency.

In the following, several optional embodiments of this application are introduced by taking an example where the sender is the TX UE and the receiver is the RX UE.

Embodiment 1: Configure SL DRX parameters of groupcast and broadcast services.

Because it is inconvenient to perform the interaction process between the TX UE and the RX UE for the groupcast and broadcast to determine the SL DRX parameter, and therefore the SL DRX parameter can be configured uniformly.

Optionally, the manner of uniformly configuring SL DRX parameters includes one or more of the following combinations:
(1) standard regulation;
(2) pre-configuration signaling;
(3) SIB signaling; and
(4) V2X layer signaling.

Optionally, the uniformly configured SL DRX parameter granularity may include one or more combinations of the following:
(1) for all broadcast and groupcast services, SL DRX parameter set 0 is used;
(2) for broadcasting services, SL DRX parameter set 1 is used;
(3) for groupcast services, SL DRX parameter set 2 is used;
(4) among broadcast services, for public safety or specified types of services, SL DRX parameter set 3 is used;
(5) among broadcast services, for commercial or specified types of services, SL DRX parameter set 4 is used;
(6) among groupcast services, for public safety or specified types of services, SL DRX parameter set 5 is used;
(7) among groupcast services, for commercial or specified types of services, SL DRX parameter set 6 is used;
(8) among broadcast services, for a service that satisfies QoS flow type 1, SL DRX parameter set 7 is used;
(9) among broadcast services, for a service that satisfies QoS flow type 2, SL DRX parameter set 8 is used;
(10) among groupcast services, for a service that satisfies QoS flow type 3, SL DRX parameter set 9 is used;
(11) among groupcast services, for a service that satisfies QoS flow type 4, SL DRX parameter set 10 is used; and
(12) for groupcast or broadcast services, if a designated service is initiated, SL DRX parameter set 11 is used.

Equivalently, TX UE and RX UE respectively obtain SL DRX parameter sets for groupcast and broadcast services, and then TX UE selects a suitable SL DRX parameter set according to the service type to be initiated by itself, and sends the service; RX UE selects one or more suitable SL DRX parameter sets according to the types of services that it is interested in or needs to receive, to monitor and receive services, so that TX UE and RX UE can perform SL communication according to the same DRX pattern, which not only satisfies different service requirements but also achieves the purpose of RX UE power saving.

The method of uniformly configuring SL DRX parameters through V2X layer signaling is as follows:

Since the V2X layer signaling can be used in the process of negotiating the QoS requirements of the group and group services between the TX UE and the RX UE, in this process, specific SL DRX parameters can also be negotiated, that is, through the V2X layer signaling process, SL DRX parameter configuration can be negotiated for a group of UEs, and this group of TX UEs and RX UEs can obtain a set of SL DRX parameters different from those in public signaling.

It should be noted that the understanding of SL DRX parameters between TX UE and RX UE needs to be completely consistent in broadcast or groupcast services, and therefore all SL DRX parameter values need to be unified between the two ends, for example, including: offset, so that TX UE and RX UE can perform transceiver operations uniformly.

For the two methods of SIB and pre-configuration, states of TX UE or RX UE are generally also distinguished, and one of the methods is selected:
(1) In a case that the TX UE or RX UE is in the OOC state, only the pre-configuration method can be selected to obtain the SL DRX parameters. If there is no corresponding SL DRX parameter in the pre-configuration signaling, the RX UE can only always (always) monitor, and TX UE is not restricted.
(2) In a case that the TX UE or RX UE is in the idle, inactive or connected state, the SL DRX parameters are obtained from the SIB message. If there is no corresponding SL DRX parameter in the SIB message, the RX UE can only always monitor, and the TX UE is not restricted.
(3) From the network side, in order to ensure the normal communication of groupcast/broadcast services, the configuration of SL DRX parameters in the pre-configuration message and the SIB messages of different cells need to be consistent, so that the TX UE and RX UE Use the same DRX pattern for sending and receiving operations.

Embodiment 2: DRX parameters of the unicast service.

Because the unicast service has a one-to-one PC5 RRC process between the TX UE and the RX UE, the mutual configuration and negotiation process of the SL DRX parameters between the TX UE and the RX UE can be performed. Compared with the broadcast/groupcast service, there is more flexible DRX parameter configuration.

In the unicast service, the SL DRX parameters can be determined by the TX UE or the RX UE, and then the SL DRX parameters are sent to the RX UE or the TX UE for unified operation. TX UE or RX UE can obtain SL DR configuration parameters in the following manners:

In a case that the TX UE/RX UE is in the off-network state, that is, in the OOC state, the TX UE/RX UE obtains the specific SL DRX parameters from the pre-configuration message. Since the pre-configuration signaling is public signaling, it is necessary to comprehensively configure all types of services that may be initiated by the UE. The UE selects appropriate SL DRX parameters based on the specific service currently initiated. If there is no corresponding SL DRX parameter, the default SL DRX parameter is selected.

In a case that the TX UE or RX UE is in the idle or inactive state, the TX UE/RX UE obtains the specific SL DRX parameters from the SIB message. Similarly, the SIB message is common signaling, and the SIB message also needs to include comprehensive configuration for all types of services that TX UE or RX UE may initiate. TX UE or RX UE selects appropriate SL DRX parameters based on the specific services currently initiated. If there is no corresponding SL DRX parameter, the default SL DRX parameter is selected.

In a case that the TX UE or RX UE is in the connected state, the TX UE or RX UE sends all its SL service information, such as QoS flow information, to the serving base station, and the serving base station determines the DRX parameters according to the service conditions of the TX UE or RX UE, and sends specific SL DRX parameters to the TX UE or RX UE through a dedicated RRC message. The SL DRX parameters configured in this way are DRX parameters suitable for the current service. The TX UE or RX UE does not need to make a selection or decision and generally directly uses the parameter.

Since the pre-configuration message and the SIB message can be public messages, it is necessary to configure the SL DRX parameter set corresponding to each QoS flow or similar QoS flow combination, for example:
- QoS flow 1, corresponding to a set of SL DRX parameter sets, or DRX configuration is not allowed.
- QoS flow a (a is greater than 1), corresponding to a set of SL DRX parameter sets, or DRX configuration is not allowed.
- QoS flow list 1, which contains one or more QoS flows, corresponding to a set of DRX parameter sets, or DRX configuration is not allowed.
- QoS flow list 2, which contains one or more QoS flows, corresponding to a set of DRX parameter sets, or DRX configuration is not allowed.
- or QoS flow 1-m, DRX parameter set 1-n, each QoS flow corresponds to one of the DRX parameter sets or does not correspond to any DRX parameter set.
- Mark one of DRX parameter sets as default.
- Explicit or implicit indication, there is no QoS flow corresponding to the SL DRX parameter set, whether to use the default SL DRX parameters, or the usage of DRX is not allowed.

TX UE or RX UE obtains the final SL DRX parameters according to the QoS flow combination of its own SL unicast service in the following way:
- The final SL DRX parameters need to meet the service requirements of each QoS flow in the SL unicast service.
- If DRX cannot be configured for any QoS flow in the SL unicast service, the SL DRX parameter is not configured for this SL link.
- If there is a QoS flow that has no directly corresponding SL DRX parameter set, the default SL DRX parameter set is allowed to be used, then the QoS flow corresponds to the default SL DRX parameter set in the following steps.
- The UE performs at least one of the following operations on the corresponding multiple SL DRX parameter sets obtained by multiple QoS flows, to obtain the final SL DRX parameters:
   (1) Take the smallest DRX cycle in the SL DRX parameter set corresponding to all QoS flows as the final DRX cycle.
   (2) Take the maximum length of the onDuration timer in the SL DRX parameter set corresponding to all QoS flows or the length of the onDuration timer in the corresponding parameter set of the minimum DRX cycle as the final length of the onDuration timer.
   (3) Take the maximum length of the inactivity timer in the SL DRX parameter set corresponding to all QoS flows or the length of the inactivity timer in the corresponding parameter set of the minimum DRX cycle as the final length of the inactivity timer.
   (4) Take the minimum length of the HARQ RTT timer in the SL DRX parameter set corresponding to all QoS flows or the length of the HARQ RTT timer in the corresponding parameter set of the minimum DRX cycle as the final length of the HARQ RTT timer.
   (5) Take the maximum length of the retransmission timer in the SL DRX parameter set corresponding to all QoS flows or the length of the retransmission timer in the corresponding SL DRX parameter set of the minimum DRX cycle as the final length of the retransmission timer.
   (6) Take the SL DRX parameter set where the smallest DRX cycle is located among the SL DRX parameter sets corresponding to all QoS flows as the final DRX parameter.
   (7) UE randomly selects an offset value according to the final length of the DRX cycle.
   (8) The UE randomly selects an offset value according to the final length of the DRX cycle and/or resource pool configuration.

In the unicast service, since TX UE and RX UE can notify each other of SL DRX parameters, after determining the SL DRX parameters according to the service type, it is best to adopt a certain random selection mechanism for the offset parameter, to prevent all UEs from selecting overlapping DRX patterns, resulting in increased collision probability and uneven resource utilization, that is, to avoid that all UEs send data at the same location and there are many idle resources in non-active time are not used by UEs.

After the TX UE or RX UE obtains the SL DRX parameters, it sends them to the RX UE or TX UE through PC5 RRC, and then the TX UE and RX UE perform data transmission and reception according to the configured DRX pattern.

Embodiment 3: Configure SL DRX parameters of groupcast, broadcast and unicast services.

The above two embodiments respectively provide SL DRX configuration modes of different service types. It can be seen that the SIB message and the pre-configuration message are common ways to obtain SL DRX parameters in different transmission modes.

This embodiment illustrates how the SIB message and the pre-configuration message are used to perform DRX configuration for different service types.

In the first manner, in the SIB message and/or the pre-configuration message, the groupcast/broadcast service and the unicast service are independently configured.

For example, SL DRX parameter configuration for groupcast service, SL DRX parameter configuration for broadcast service, and SL DRX parameter configuration for unicast service can be performed independently. When UE wants to send or receive a certain type of service, it needs to search the corresponding SL DRX parameter configuration set for appropriate SL DRX parameters, and performs receiving or sending operations according to the SL DRX parameters.

Alternatively, the SL DRX parameters of the groupcast service and the broadcast service are jointly configured, and the SL DRX parameters of the unicast service are configured independently. The difference between this method and the previous method is that the groupcast and broadcast services are jointly configured. When UE wants to send or receive a certain type of groupcast/broadcast service, it should search the unified SL DRX parameter configuration set for appropriate SL DRX parameters, so as to perform receive or send operations accordingly.

In the second manner, in the SIB message and/or the pre-configuration message, the groupcast/broadcast service and the unicast service are jointly configured.

In this way, since the unicast service is configured according to the corresponding QoS flow and SL DRX parameter set, the groupcast/broadcast service should also adopt the same structure, which can be as follows:
- Mark the specified SL DRX parameter set as serving for the groupcast or broadcast service.
- Select the corresponding SL DRX parameter set according to the specific QoS requirements of groupcast or broadcast services.
- The default SL DRX parameter set is used for groupcast or broadcast services.

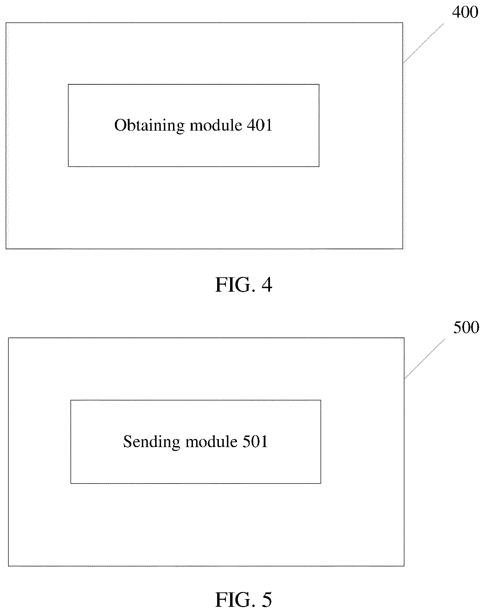

Referring to FIG. 4, an embodiment of this application provides an SL DRX configuration apparatus, which is applied to a terminal. The apparatus 400 includes:
an obtaining module 401, configured to obtain an SL DRX parameter from a network side.

In an embodiment of this application, the obtaining module 401 is further configured to:
in a case that a sender of the sidelink or a receiver of the sidelink is out of coverage, obtain SL DRX parameters corresponding to groupcast services, broadcast services and/or unicast services according to a pre-configuration message (pre-configuration) sent by a network side;
   or
in a case that the sender of the sidelink or the receiver of the sidelink is in an idle state or an inactive state or a connected state, obtain SL DRX parameters corresponding to groupcast services and/or broadcast services according to a system information block message sent by the network side;
   or
in a case that the sender of the sidelink or the receiver of the sidelink is in an idle state or an inactive state, obtain SL DRX parameters corresponding to unicast services according to a system information block message sent by the network side; and
   or
in a case that the sender of the sidelink or the receiver of the sidelink is in a connected state, obtain SL DRX parameters corresponding to unicast services through dedicated RRC signaling.

In an embodiment of this application, the obtaining module 401 is further configured to: report, by the sender of the sidelink or the receiver of the sidelink in the connected state, service information of the sender or the receiver to the network side.

In an embodiment of this application, the apparatus 400 further includes: a sending module, configured to:
in a case that the sender of the sidelink obtains the SL DRX parameter from the network side, send the SL DRX parameter to the receiver of the sidelink;
   or
in a case that the receiver of the sidelink obtains the SL DRX parameter from the network side, send the SL DRX parameter to the sender of the sidelink.

In an implementation manner of this application, the pre-configuration message or the system information block message includes: an SL DRX parameter set corresponding to a QoS flow or a QoS flow combination;
where the SL DRX parameter set is used to determine the SL DRX parameter with the QoS flow combination of the unicast service, the groupcast service, or the broadcast service of the terminal.

In an implementation manner of this application, the SL DRX parameter meets a service requirement of each QoS flow in the unicast service, the groupcast service or the broadcast service of the sender of the sidelink or the receiver of the sidelink.

In an implementation manner of this application, the SL DRX parameter includes: a DRX cycle, where the DRX cycle is a DRX cycle specified in the SL DRX parameter set corresponding to all QoS flows, and the specified DRX cycle is selected from the SL DRX parameter set according to a preset manner.

In an embodiment of this application, the SL DRX parameter includes: a length of an onDuration timer, where the length of the onDuration timer is the maximum length of the onDuration timer in the SL DRX parameter set corresponding to all QoS flows, or a length of the onDuration timer in the SL DRX parameter set corresponding to the specified DRX cycle.

In an embodiment of this application, the SL DRX parameter includes: a length of an inactivity timer, where the length of the inactivity timer is the maximum length of the inactivity timer in the SL DRX parameter set corresponding to all QoS flows, or a length of the inactivity timer in the SL DRX parameter set corresponding to the specified DRX cycle.

In an embodiment of this application, the SL DRX parameter includes: a length of a HARQ RTT timer, where the length of the HARQ RTT timer is the minimum length of the HARQ RTT timer in the SL DRX parameter set corresponding to all QoS flows, or a length of the HARQ RTT timer in the SL DRX parameter set corresponding to the specified DRX cycle.

In an embodiment of this application, the SL DRX parameter includes: a length of a retransmission timer, where the length of the retransmission timer is the maximum length of the retransmission timer in the SL DRX parameter set corresponding to all QoS flows, or a length of the retransmission timer in the SL DRX parameter set corresponding to the specified DRX cycle.

In an embodiment of this application, the SL DRX parameter includes: parameters in the first SL DRX parameter set, where the first SL DRX parameter set is an SL DRX parameter set of a specified DRX cycle in the SL DRX parameter set corresponding to all QoS flows.

In an embodiment of this application, the apparatus 400 further includes:
a selection module, configured to randomly select an offset value of the SL DRX parameter according to the length of the DRX cycle and/or resource pool configuration.

The apparatus provided in this embodiment of this application can implement the processes implemented in the method embodiment shown in FIG. 2 and achieve a same technical effect. To avoid repetition, details are not described herein again.

Referring to FIG. 5, an embodiment of this application provides an SL DRX configuration apparatus, which is applied to a network side device. The apparatus 500 includes:
a sending module 501, configured to send an SL DRX parameter to a terminal in a sidelink.

In an embodiment of this application, the sending module 501 is further configured to: sending the SL DRX parameter to a sender of the sidelink or a receiver of the sidelink through a system information block message or a pre-configuration message or dedicated RRC signaling; where a service type corresponding to the SL DRX parameter includes one or more of the following: unicast service, groupcast service, and broadcast service.

In an implementation manner of this application, the pre-configuration message or the system information block message includes: an SL DRX parameter set corresponding to a QoS flow or a QoS flow combination;
where the SL DRX parameter set is used to determine the SL DRX parameter with the QoS flow combination of the unicast service, the groupcast service, or the broadcast service of the sender of the sidelink or the receiver of the sidelink.

In an implementation manner of this application, the SL DRX parameter meets a service requirement of each QoS flow in the unicast service, the groupcast service or the broadcast service of the terminal.

In an implementation manner of this application, the SL DRX parameter includes: a DRX cycle, where the DRX cycle is a DRX cycle specified in the SL DRX parameter set corresponding to all QoS flows, and the specified DRX cycle is selected from the SL DRX parameter set according to a preset manner.

In an embodiment of this application, the SL DRX parameter includes: a length of an onDuration timer, where the length of the onDuration timer is the maximum length of the onDuration timer in the SL DRX parameter set corresponding to all QoS flows, or a length of the onDuration timer in the SL DRX parameter set corresponding to the specified DRX cycle.

In an embodiment of this application, the SL DRX parameter includes: a length of an inactivity timer, where the length of the inactivity timer is the maximum length of the inactivity timer in the SL DRX parameter set corresponding to all QoS flows, or a length of the inactivity timer in the SL DRX parameter set corresponding to the specified DRX cycle.

In an embodiment of this application, the SL DRX parameter includes: a length of a HARQ RTT timer, where the length of the HARQ RTT timer is the minimum length of the HARQ RTT timer in the SL DRX parameter set corresponding to all QoS flows, or a length of the HARQ RTT timer in the SL DRX parameter set corresponding to the specified DRX cycle.

In an embodiment of this application, the SL DRX parameter includes: a length of a retransmission timer, where the length of the retransmission timer is the maximum length of the retransmission timer in the SL DRX parameter set corresponding to all QoS flows, or a length of the retransmission timer in the SL DRX parameter set corresponding to the specified DRX cycle.

In an embodiment of this application, the SL DRX parameter includes: parameters in the first SL DRX parameter set, where the first SL DRX parameter set is an SL DRX parameter set of a specified DRX cycle in the SL DRX parameter set corresponding to all QoS flows.

The apparatus provided in this embodiment of this application can implement the processes implemented in the method embodiment shown in FIG. 4 and achieve a same technical effect. To avoid repetition, details are not described herein again.

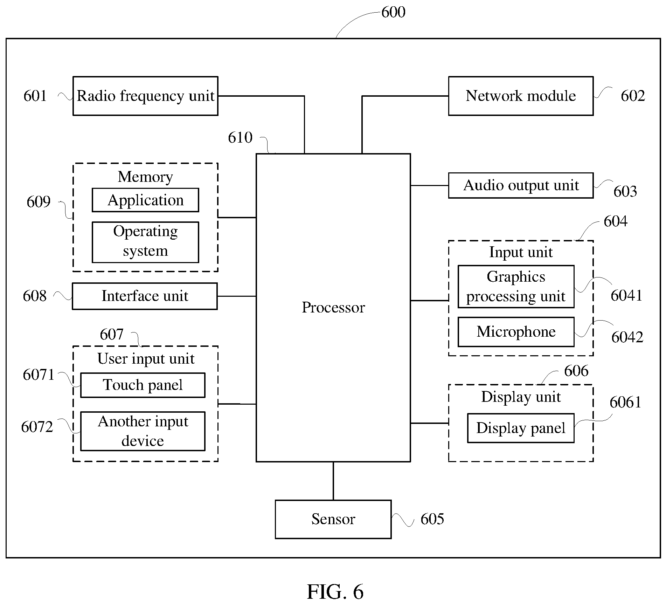

FIG. 6 is a schematic diagram of a hardware structure of a terminal for implementing embodiments of this application. The terminal 600 includes but is not limited to components such as a radio frequency unit 601, a network module 602, an audio output unit 603, an input unit 604, a sensor 605, a display unit 606, a user input unit 607, an interface unit 608, a memory 609, and a processor 610.

It may be understood by a person skilled in the art that the terminal 600 may further include a power supply (such as a battery) that supplies power to each component. The power supply may be logically connected to the processor 610 by using a power management system, to implement functions such as charging, discharging, and power consumption management by using the power management system. The terminal structure shown in FIG. 6 constitutes no limitation on the terminal, and the terminal may include more or fewer components than those shown in the figure, or combine some components, or have different component arrangements. Details are not described herein.

It should be understood that, in this embodiment of this application, the input unit 604 may include a graphics processing unit (Graphics Processing Unit, GPU) 6041 and a microphone 6042, and the graphics processing unit 6041 processes image data of a still picture or a video obtained by an image capture apparatus (such as a camera) in a video capture mode or an image capture mode. The display unit 606 may include a display panel 6061. Optionally, the display panel 6061 may be configured in a form such as a liquid crystal display or an organic light-emitting diode. The user input unit 607 includes a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a functional button (such as a volume control button or a power on/off button), a trackball, a mouse, and a joystick. Details are not described herein.

In this embodiment of this application, the radio frequency unit 601 receives downlink data from a network side device and then sends the downlink data to the processor 610 for processing; and sends uplink data to the network side device. Usually, the radio frequency unit 601 includes but is not limited to an antenna, at least one amplifier, a transceiver, a coupler, a low noise amplifier, a duplexer, and the like.

The memory 609 may be configured to store a software program or an instruction and various data. The memory 609 may mainly include a program or instruction storage area and a data storage area, where the program or instruction storage area may store an operating system, an application program or instructions required by at least one function (such as a sound playback function, an image playback function, etc.) and the like. In addition, the memory 609 may include a high-speed random access memory and non-volatile memory. The nonvolatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 610 may include one or more processing units. Optionally, an application processor and a modem processor may be integrated into the processor 610. The application processor mainly processes an operating system, a user interface, an application, an instruction, or the like. The modem processor mainly processes wireless communications, for example, a baseband processor. It can be understood that, alternatively, the modem processor may not be integrated into the processor 610.

The terminal provided in this embodiment of this application can implement the processes implemented in the method embodiment shown in FIG. 2, and achieve a same technical effect. To avoid repetition, details are not provided herein again.

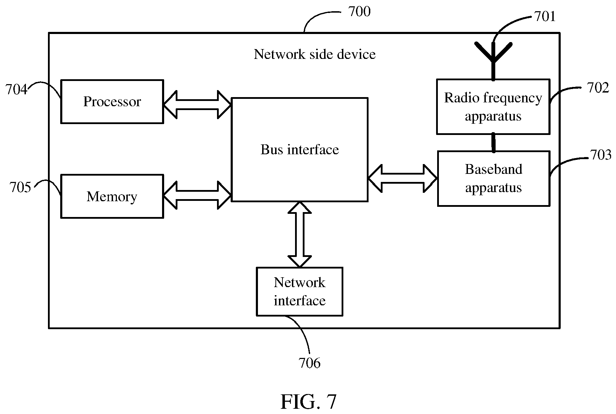

An embodiment of this application further provides a network side device. As shown in FIG. 7, a network side device 700 includes an antenna 701, a radio frequency apparatus 702, and a baseband apparatus 703. The antenna 701 is connected to the radio frequency apparatus 702. In an uplink direction, the radio frequency apparatus 702 receives information through the antenna 701, and sends the received information to the baseband apparatus 703 for processing. In a downlink direction, the baseband apparatus 703 processes information to be sent and sends the information to the radio frequency apparatus 702, and the radio frequency apparatus 702 processes the received information and sends the information through the antenna 701.

The foregoing band processing apparatus may be located in the baseband apparatus 703, and the method performed by the network side device in the foregoing embodiment may be implemented in the baseband apparatus 703. The baseband apparatus 703 includes a processor 704 and a memory 705.

The baseband apparatus 703 may include, for example, at least one baseband board. A plurality of chips are disposed on the baseband board. As shown in FIG. 7, one chip is, for example, the processor 704, connected to the memory 705, to invoke a program in the memory 705, thereby performing operations of the network device shown in the foregoing method embodiment.

The baseband apparatus 703 may further include a network interface 706, configured to exchange information with the radio frequency apparatus 702. For example, the interface is a common public radio interface (Common Public Radio Interface, CPRI).

Specifically, the network side device in this embodiment of this application further includes an instruction or a program stored in the memory 705 and executable on the processor 704. The processor 704 invokes the instruction or the program in the memory 705 to perform the method performed by the modules shown in FIG. 5, and a same technical effect is achieved. To avoid repetition, details are not described herein again.

An embodiment of this application further provides a computer program product. The computer program product is stored in a non-volatile storage medium, and the computer program product is executed by at least one processor to implement steps of the method shown in FIG. 2 or FIG. 3.

The embodiments of this application also provide a readable storage medium, the readable storage medium may be nonvolatile or volatile, and a program or instruction is stored in the readable storage medium, and when the program or instruction is executed by the processor, each process of the embodiment of the method in FIG. 2 or FIG. 3 is performed, and the same technical effect can be achieved. To avoid repetition, details are not repeated herein.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, the chip includes a processor and a communication interface, the communication interface is coupled to the processor, and the processor is configured to execute the program or instruction of the network side device to realize each process of the embodiment of the method according to FIG. 2 or FIG. 3, and can achieve the same technical effect. To avoid repetition, details are not repeated herein.

It should be understood that the chip mentioned in this embodiment of this application may also be referred to as a system-level chip, a system chip, a chip system, or an on-chip system chip.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A sidelink SL discontinuous reception DRX configuration method, performed by a terminal, comprising:
obtaining an SL DRX parameter from a network side.

2. The method according to claim 1, wherein the step of obtaining an SL DRX parameter from a network side comprises:
in a case that a sender of the sidelink or a receiver of the sidelink is out of coverage, obtaining SL DRX parameters corresponding to groupcast services, broadcast services and/or unicast services according to a pre-configuration message sent by the network side;
or
in a case that the sender of the sidelink or the receiver of the sidelink is in an idle state or an inactive state or a connected state, obtaining SL DRX parameters corresponding to groupcast services and/or broadcast services according to a system information block message sent by the network side;
or
in a case that the sender of the sidelink or the receiver of the sidelink is in an idle state or an inactive state, obtaining SL DRX parameters corresponding to unicast services according to a system information block message sent by the network side;
or
in a case that the sender of the sidelink or the receiver of the sidelink is in a connected state, obtaining SL DRX parameters corresponding to unicast services through dedicated radio resource control RRC signaling.

3. The method according to claim 2, wherein the method further comprises:
reporting, by the sender of the sidelink or the receiver of the sidelink in the connected state, service information of the sender or the receiver to the network side.

4. The method according to claim 2, wherein the method further comprises:
in a case that the sender of the sidelink obtains the SL DRX parameter from the network side, sending the SL DRX parameter to the receiver of the sidelink;
or
in a case that the receiver of the sidelink obtains the SL DRX parameter from the network side, sending the SL DRX parameter to the sender of the sidelink.

5. The method according to claim 2, wherein the pre-configuration message or the system information block message comprises: an SL DRX parameter set corresponding to a quality of service QoS flow or a QoS flow combination;
wherein the SL DRX parameter set is used to determine the SL DRX parameter with the QoS flow combination of the unicast service, the groupcast service, or the broadcast service of the sender of the sidelink or the receiver of the sidelink.

6. The method according to claim 1, wherein
the SL DRX parameter meets a service requirement of each QoS flow in the unicast service, the groupcast service or the broadcast service of the terminal;
or
the SL DRX parameter comprises: a DRX cycle, wherein the DRX cycle is a DRX cycle specified in the SL DRX parameter set corresponding to all QoS flows;
or
the SL DRX parameter comprises: a length of an onDuration timer, wherein the length of the onDuration timer is a length of the onDuration timer specified in the SL DRX parameter set corresponding to all QoS flows, or a length of the onDuration timer in the SL DRX parameter set corresponding to a specified DRX cycle;
or
the SL DRX parameter comprises: a length of an inactivity timer, wherein the length of the inactivity timer is a length of the inactivity timer specified in the SL DRX parameter set corresponding to all QoS flows, or a length of the inactivity timer in the SL DRX parameter set corresponding to a specified DRX cycle;
or
the SL DRX parameter comprises: a length of a hybrid automatic repeat request round-trip time timer HARQ RTT timer, wherein the length of the HARQ RTT timer is a length of the HARQ RTT timer specified in the SL DRX parameter set corresponding to all QoS flows, or a length of the HARQ RTT timer in the SL DRX parameter set corresponding to a specified DRX cycle;
or
the SL DRX parameter comprises: a length of a retransmission timer, wherein the length of the retransmission timer is a length of the retransmission timer specified in the SL DRX parameter set corresponding to all QoS flows, or a length of the retransmission timer in the SL DRX parameter set corresponding to a specified DRX cycle;
or
the SL DRX parameter comprises: parameters in a first SL DRX parameter set, wherein the first SL DRX parameter set is an SL DRX parameter set of a specified DRX cycle in the SL DRX parameter set corresponding to all QoS flows.

7. The method according to claim 6, wherein the method further comprises:
randomly selecting an offset value of the SL DRX parameter according to a length of the DRX cycle and/or resource pool configuration.

8. A sidelink discontinuous reception configuration method, performed by a network side device, comprising:
sending an SL DRX parameter to a terminal in a sidelink.

9. The method according to claim 8, wherein the step of sending an SL DRX parameter to a terminal comprises:
sending the SL DRX parameter to a sender of the sidelink or a receiver of the sidelink through a system information block message or a pre-configuration message or dedicated RRC signaling;
wherein a service type corresponding to the SL DRX parameter comprises one or more of the following: unicast service, groupcast service, and broadcast service.

10. The method according to claim 9, wherein the pre-configuration message or the system information block message comprises: an SL DRX parameter set corresponding to a QoS flow or a QoS flow combination;
wherein the SL DRX parameter set is used to determine the SL DRX parameter with the QoS flow combination of the unicast service, the groupcast service, or the broadcast service of the sender of the sidelink or the receiver of the sidelink.

11. The method according to claim 8, wherein
the SL DRX parameter meets a service requirement of each QoS flow in the unicast service, the groupcast service or the broadcast service of the terminal;
or
the SL DRX parameter comprises: a DRX cycle, wherein the DRX cycle is a DRX cycle specified in the SL DRX parameter set corresponding to all QoS flows;
or
the SL DRX parameter comprises: a length of an onDuration timer, wherein the length of the onDuration timer is a length of the onDuration timer specified in the SL DRX parameter set corresponding to all QoS flows, or a length of the onDuration timer in the SL DRX parameter set corresponding to a specified DRX cycle;
or
the SL DRX parameter comprises: a length of an inactivity timer, wherein the length of the inactivity timer is a length of the inactivity timer specified in the SL DRX parameter set corresponding to all QoS flows, or a length of the inactivity timer in the SL DRX parameter set corresponding to a specified DRX cycle;
or
the SL DRX parameter comprises: a length of a HARQ RTT timer, wherein the length of the HARQ RTT timer is a length of the HARQ RTT timer specified in the SL DRX parameter set corresponding to all QoS flows, or a length of the HARQ RTT timer in the SL DRX parameter set corresponding to a specified DRX cycle;
or
the SL DRX parameter comprises: a length of a retransmission timer, wherein the length of the retransmission timer is a length of the retransmission timer specified in the SL DRX parameter set corresponding to all QoS flows, or a length of the retransmission timer in the SL DRX parameter set corresponding to a specified DRX cycle;
or
the SL DRX parameter comprises: parameters in a first SL DRX parameter set, wherein the first SL DRX parameter set is an SL DRX parameter set of a specified DRX cycle in the SL DRX parameter set corresponding to all QoS flows.

12. An SLDRX configuration apparatus, applied to a terminal, comprising:
an obtaining module, configured to obtain an SL DRX parameter from a network side.

13. The apparatus according to claim 12, wherein the obtaining module is further configured to:
in a case that a sender of the sidelink or a receiver of the sidelink is out of coverage, obtain SL DRX parameters corresponding to groupcast services, broadcast services and/or unicast services according to a pre-configuration message sent by the network side;
or
in a case that the sender of the sidelink or the receiver of the sidelink is in an idle state or an inactive state or a connected state, obtain SL DRX parameters corresponding to groupcast services and/or broadcast services according to a system information block message sent by the network side; or
in a case that the sender of the sidelink or the receiver of the sidelink is in an idle state or an inactive state, obtain SL DRX parameters corresponding to unicast services according to a system information block message sent by the network side;
or
in a case that the sender of the sidelink or the receiver of the sidelink is in a connected state, obtain SL DRX parameters corresponding to unicast services through dedicated RRC signaling.

14. The apparatus according to claim 12, wherein the obtaining module is further configured to: report, by the sender of the sidelink or the receiver of the sidelink in the connected state, service information of the sender or the receiver to the network side.

15. The apparatus according to claim 12, wherein
the SL DRX parameter meets a service requirement of each QoS flow in the unicast service, the groupcast service or the broadcast service of the terminal;
or
the SL DRX parameter comprises: a DRX cycle, wherein the DRX cycle is a DRX cycle specified in the SL DRX parameter set corresponding to all QoS flows;
or
the SL DRX parameter comprises: a length of an onDuration timer, wherein the length of the onDuration timer is a length of the onDuration timer specified in the SL DRX parameter set corresponding to all QoS flows, or a length of the onDuration timer in the SL DRX parameter set corresponding to a specified DRX cycle;
or
the SL DRX parameter comprises: a length of an inactivity timer, wherein the length of the inactivity timer is a length of the inactivity timer specified in the SL DRX parameter set corresponding to all QoS flows, or a length of the inactivity timer in the SL DRX parameter set corresponding to a specified DRX cycle;
or
the SL DRX parameter comprises: a length of a HARQ RTT timer, wherein the length of the HARQ RTT timer is a length of the HARQ RTT timer specified in the SL DRX parameter set corresponding to all QoS flows, or a length of the HARQ RTT timer in the SL DRX parameter set corresponding to a specified DRX cycle;
or
the SL DRX parameter comprises: a length of a retransmission timer, wherein the length of the retransmission timer is a length of the retransmission timer specified in the SL DRX parameter set corresponding to all QoS flows, or a length of the retransmission timer in the SL DRX parameter set corresponding to a specified DRX cycle;
or
the SL DRX parameter comprises: parameters in a first SL DRX parameter set, wherein the first SL DRX parameter set is an SL DRX parameter set of a specified DRX cycle in the SL DRX parameter set corresponding to all QoS flows.

16. An SL DRX configuration apparatus, applied to a network side device, comprising:
a sending module, configured to send an SL DRX parameter to a terminal in a sidelink.

17. The apparatus according to claim 16, wherein the sending module is further configured to: sending the SL DRX parameter to a sender of the sidelink or a receiver of the sidelink through a system information block message or a pre-configuration message or dedicated RRC signaling; wherein a service type corresponding to the SL DRX parameter comprises one or more of the following: unicast service, groupcast service, and broadcast service.

18. The apparatus according to claim 16, wherein
the SL DRX parameter meets a service requirement of each QoS flow in the unicast service, the groupcast service or the broadcast service of the terminal;
or
the SL DRX parameter comprises: a DRX cycle, wherein the DRX cycle is a DRX cycle specified in the SL DRX parameter set corresponding to all QoS flows;
or
the SL DRX parameter comprises: a length of an onDuration timer, wherein the length of the onDuration timer is a length of the onDuration timer specified in the SL DRX parameter set corresponding to all QoS flows, or a length of the onDuration timer in the SL DRX parameter set corresponding to a specified DRX cycle;
or
the SL DRX parameter comprises: a length of an inactivity timer, wherein the length of the inactivity timer is a length of the inactivity timer specified in the SL DRX parameter set corresponding to all QoS flows, or a length of the inactivity timer in the SL DRX parameter set corresponding to a specified DRX cycle;
or
the SL DRX parameter comprises: a length of a HARQ RTT timer, wherein the length of the HARQ RTT timer is a length of the HARQ RTT timer specified in the SL DRX parameter set corresponding to all QoS flows, or a length of the HARQ RTT timer in the SL DRX parameter set corresponding to a specified DRX cycle;
or
the SL DRX parameter comprises: a length of a retransmission timer, wherein the length of the retransmission timer is a length of the retransmission timer specified in the SL DRX parameter set corresponding to all QoS flows, or a length of the retransmission timer in the SL DRX parameter set corresponding to a specified DRX cycle;
or
the SL DRX parameter comprises: parameters in a first SL DRX parameter set, wherein the first SL DRX parameter set is an SL DRX parameter set of a specified DRX cycle in the SL DRX parameter set corresponding to all QoS flows.

19. A terminal, comprising: a processor, a memory, and a program stored in the memory and executable on the processor, wherein when the program is executed by the processor, the steps in the method according to any one of claims 1 to 7 are implemented.

20. A network side device, comprising: a processor, a memory, and a program stored in the memory and executable on the processor, wherein when the program is executed by the processor, the steps of the method according to any one of claims 8 to 11 are implemented.

21. A readable storage medium, wherein the readable storage medium stores a program or an instruction, and when the program or the instruction is executed by a processor, the steps of the method according to any one of claims 1 to 11 are implemented.

22. A computer program product, wherein the computer program product is stored in a non-volatile storage medium, and the computer program product is executed by at least one processor to implement the steps of the method according to any one of claims 1 to 11.

23. A chip, wherein the chip comprises a processor and a communication interface, the communication interface is coupled to the processor, and the processor is configured to execute a program or an instruction, to perform steps in the method according to any one of claims 1 to 11.

24. A communication device, configured to perform the steps of the method according to any one of claims 1 to 11.
